# EUROPÄISCHE PATENTANMELDUNG

(11) **EP 3 053 680 A1**
(43) Veröffentlichungstag der Anmeldung: **10.08.2016**
(21) Anmeldenummer: 16000303.4
(22) Anmeldetag: 08.02.2016
(51) Int. Cl.: B23B 5/16, B23B 29/034

(54) **VERSTELLBARER ANFASKOPF FÜR EINE ROHRENDENBEARBEITUNGSSTATION SOWIE ROHRENDENBEARBEITUNGSSTATION**

(30) Priorität: 06.02.2015 DE 202015000913 U
(71) Anmelder: DWT GmbH, 46240 Bottrop (DE)
(72) Erfinder: HUBO, Mathias, 46240 Bottrop (DE)
(74) Vertreter: Grosse Schumacher Knauer von Hirschhausen

(57) **Zusammenfassung**

Die Erfindung betrifft einen an einer mobilen Rohrendenbearbeitungsstation drehantreibbar befestigbaren Anfaskopf (1) mit Bearbeitungswerkzeugen (6a-6c, 7a-7c) zum Bearbeiten eines Rohrendes (8) unter kreisförmigem Umlaufen um eine Rotationsachse (10) des Anfaskopfs (1) zwecks Herstellung eines Fasenprofils (9) am Rohrende (8) und mit einer relativ zur Rotationsachse (10) entsprechend dem Durchmesser des zu bearbeitenden Rohrendes (8) radial verstellbaren Bearbeitungswerkzeugaufnahme (2).

## Beschreibung

Die Erfindung betrifft einen Anfaskopf für eine insbesondere mobile Rohrendenbearbeitungsstation sowie eine insbesondere mobile Rohrendenbearbeitungsstatlon nach dem Oberbegriff des Anspruchs 1 bzw. 10.

### TECHNISCHER HINTERGRUND

Zum Schweißverbinden von Rohren auf einer Baustelle, beispielsweise beim Anschweißen von Rohrbögen oder dergleichen an vorhandene Rohrenden beim Kesselbau, müssen die Rohre ausgerichtet und in Position gehalten werden. Dies ist zeltaufwändig und fehleranfällig. Zudem bedarf die Schweißvorbereitung zusätzlicher Arbeiten wie etwa dem Ausbilden einer Ringnut als Schweißgrund.

Zur Vereinfachung können an den jeweils miteinander zu verschweißenden Rohrenden zueinander komplementäre Fasenprofile ausgebildet werden, die eine Ausrichtung und einen Schweißgrund bereitstellen.

Für eine Ausbildung derartiger Fasenprofile ist aus dem DE 20 2012 002997 U1, dessen Offenbarung durch Inbezugnahme aufgenommen und auf welches zur ergänzenden Auslegung der hier gleichlautend verwendeten Begrifflichkelten verwiesen wird, der Anmelderin bereits eine Rohrendenbearbeitungsvorrichtung bekannt. Allerdings ist die bekannte Rohrendenberarbeitungsvorrichtung nur aufwändig an unterschiedliche Rohrdurchmesser anpassbar, so dass für jeden Rohrdurchmesser ein entsprechender Anfaskopf vorgehalten werden muss, Insbesondere im mobilen Einsatz ist eine einfacher handhabbare Verstellung erstrebenswert.

### DARSTELLUNG DER ERFINDUNG

Ausgehend hiervon liegt der Erfindung die Aufgabe zugrunde, einen Anfaskopf für eine Rohrendenbearbeitungsstation sowie eine Rohrendenbearbeitungsstation nach dem Oberbegriff des Anspruchs 1 bzw. 10 zu schaffen, die die eine Anpassung an verschiedene Rohrdurchmesser bei mobilem Einsatz an der Baustelle schnell und zuverlässig unter Sicherstellung hoher Präzision des Anfasprofils und robustem Mechanismus ermöglichen.

Diese Aufgabe wird entsprechend den Merkmalen des Anspruchs 1 bzw, 10 gelöst.

Demnach wird ein an einer Insbesondere mobilen Rohrendenbearbeftungsstation drehantreibbar befestigbarer Anfaskopf mit Bearbeitungswerkzeugen zum Bearbeiten eines Rohrendes unter kreisförmigem Umlaufen um eine Rotationsachse des Anfaskopfs zwecks Herstellung eines Fasenprofils am Rohrende geschaffen, bei dem eine relativ zur Rotationsachse entsprechend dem Durchmesser des zu bearbeitenden Rohrendes radial verstellbare Bearbeitungswerkzeugaufnahme vorgasehen ist.

Die radial verstellbare Bearbeitungswerkzeugaufnahme gestattet eine Einstellung des Anfaskopfs auf verschiedene Rohrdurchmesser. So kann die Bearbeitungswerkzeugaufnahme für einen kleineren Rohrdurchmesser radial näher zur Rotationsachse am Anfaskopf befestigt werden als für einen größeren Rohrdurchmesser. Der Anfaskopf ist damit für eine Vielzahl von Rohrdurchmessern geeignet

Besonders zweckmäßig ist es, die Bearbeitungswerkzeugaufnahme in einer Nut zu führen und/oder zu befestigen. Eine derartige Nut ist einfach herstellbar und kann, sofem sie ausreichend tief ist, eine Seitenstabilität für die Bearbeitungswerkzeugaufnahme sicherstellen. So nehmen die Wandungen der Nut die quer zur beim Anfasen auf die Bearbeitungswerkzeugaufnahme wirkende Kraft auf. Gleichzeitig ist die Bearbeitungswerkzeugaufnahme entlang der Nut stufenlos verschiebbar.

Die zum Befestigen der Bearbeitungswerkzeugaufnahme an der gewünschten Position in der Nut erforderliche Kraft Ist verhältnismäßig gering, da beim Anfasen die Kraftkomponente quer zur und nicht entlang der Nut wirkt. So kann es ausreichen, eine Klemmvorrichtung vorzusehen, beispielsweise in Form einer sich von außen bis zur Nut erstreckenden Gewindebohrung, In welche eine Klemmschraube einschraubbar Ist, deren freies Ende die Bearbeitungswerkzeugaufnahme klemmend in der Nut befestigt. Zweckmäßigerwelse sind mehrere derartige Gewindebohrungen an unterschiedlichen radialen Abständen zur Rotationsachse vorgesehen, um die Bearbeitungswerkzeugaufnahme an verschiedenen Stellen befestigen zu können. Die Nutwandung und/oder die Bearbeitunsgwerkzeugaufnahme, jedenfalls im in der Nut aufgenommenen Abschnitt, können jeweils eine Aufrauhung oder Oberflächenstrukturierung wie etwa Rillen oder dergleichen aufweisen, um ein Verklammen zu erleichtem. Gegebenenfalls weist die Bearbeitungswerkzeugaufnahme ein zum freien Ende des Schraube komplementäre Aussparung oder Bohrung auf, in die bzw. durch die sich die Schraube hindurch erstrecken kann, ggf. in ein Loch oder Sackloch In der anderen Nutwandung. Ein derartiger Verstellmechanismus ist robust und einfach handhabbar.

Vorzugsweise weist der Anfaskopf quer zur Rotationsachse eine im Wesentlichen langgestreckte Form auf. Z.B. kann er quaderförmig sein oder eiförmig oder dergleichen. Die bekannte Kreisscheibenform ist ebenfalls geeignet, aber nicht mehr erforderlich, insbesondere in Ausführungsformen mit zwei Nuten und/oder mehreren Bearbeitungswerkzeugen pro Bearbeitungswerkzeugaufnahme. Es ergibt sich eine Materialeinsparung.

Es kann eine weitere Nut vorgesehen sein, die vorzugsweise in Verlängerung der ersten Nut und insbesondere quer versetzt dazu ausgestaltet ist und eine weitere Bearbeitungswerkzeugaufnahme aufnimmt. Ggf, sind drei oder mehr Nuten vorgesehen; auch kann bei zwei Nuten ein Winkel kleiner 180° vorgesehen sein.

Bevorzugt nimmt die Bearbeitungswerkzeugaufnahme zwei oder mehr relativ zueinander (i) parallel zur Rotationsachse wirkhöhenversetzte und/oder (ii) quer zur Rotationsachse (9) radial versetzte und/oder (iii) verschieden ausgestaltete und/oder (iv) mit unterschiedlichem Angriffswinkel angeordnete Bearbeitungswerkzeuge auf. Eine derartig für ein bestimmtes Fasenprofil vorkonfigurierte Bearbeitungswerkzeugaufnahme ist schnell austauschbar, sollte ein anderes Fasenprofll erforderlich sein, und weist den besonderen Vorteil der schnellen Einstellbarkelt auf: Mit einer Verstellung sind mehrere Bearbeitungswerkzeuge auf den neuen Rohrdurchmesser einstellbar und müssen nicht neu zueinander ausgerichtet werden, wie es Im Stand der Technik erforderlich ist.

Beim Bearbeitungswerkzeug handelt es sich zweckmäßigerweise um eine Wechselplatte.

Ferner wird eine insbesondere mobile Rohrendenbearbeitungsstation zum Ausbilden eines Fasenprofils an einem Rohrende, mit einer Rohraufnahme, einem Anfaskopf und einer Antriebsvorrichtung für den Anfaskopf, geschaffen, umfassend einen Anfaskopf wie vorstehend beschrieben mit einer relativ zur Rotationsachse entsprechend dem Durchmesser des zu bearbeitenden Rohrs radial verstellbaren Bearbeitungswerkzeugaufnahme zum Ausbilden eines vorgegebenen Fasenprofils an der Rohrendenaußen- und -Innenseite in einem Arbeitsgang.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die In dem Anwendungsgebiet bekannten Auswahlkriterien uneingeschränkt Anwendung finden können.

Weitere Merkmale und Ausführungsformen der Erfindung ergeben sich aus der nachfolgenden Beschreibung, den Figuren und den Ansprüchen.

### KURZBESCHREIBUNG DER FIGUREN

Fig.1A zeigt eine dreidimensionale Ansicht eines Anfaskopfs.
Fig. 1B, 1C zeigen den drehantreibbar montierten und für Rohrenden unterschiedlicher Durchmesser konfigurierten Anfaskopf der Fig. 1A.
Fig. 2 zeigt einen Schnitt entlang der Nut des Anfaskopfs der Fig. 1 mit aufgesetztem Rohrende und ausgeblendetem Anfaskopfkörper.
Fig. 3 entspricht Fig. 2 In Draufsicht.
Fig. 4 illustriert zwei über Fasenprofile Ineinander greifende Rohrenden.
Fig. 4a illustriert das Verbinden der beiden Rohrenden aus Fig. 4.
Fig. 5 bis 7 entsprechen Fig. 1 bis 3 für eine weitere Ausführungsform.
Fig. 8 und 9 entsprechen Flg. 2 für weitere Ausführungsformen.
Fig. 10 (a) und 10 (b) illustrieren Anfasköpfe entsprechend Fig. 2 bzw. 9.
Fig. 11 (a), (b), (c) illustrieren unterschiedlich konfigurierte Bearbeitungswerkzeughalter.
Flg. 11 (d), (e) illustrieren unterschiedliche Bearbeitungswerkzeuge.

### DETAILLIERTE BESCHREIBUNG VON AUSFÜHRUNGSBEISPIELEN

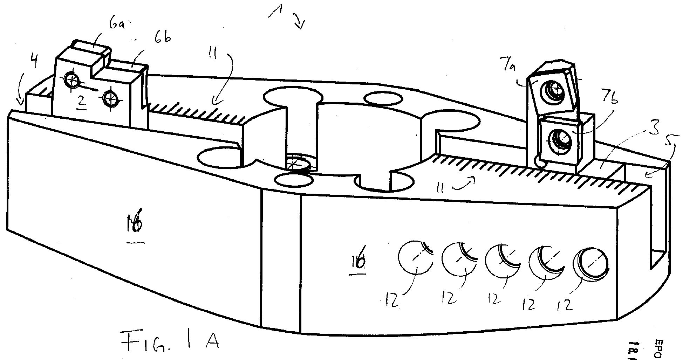

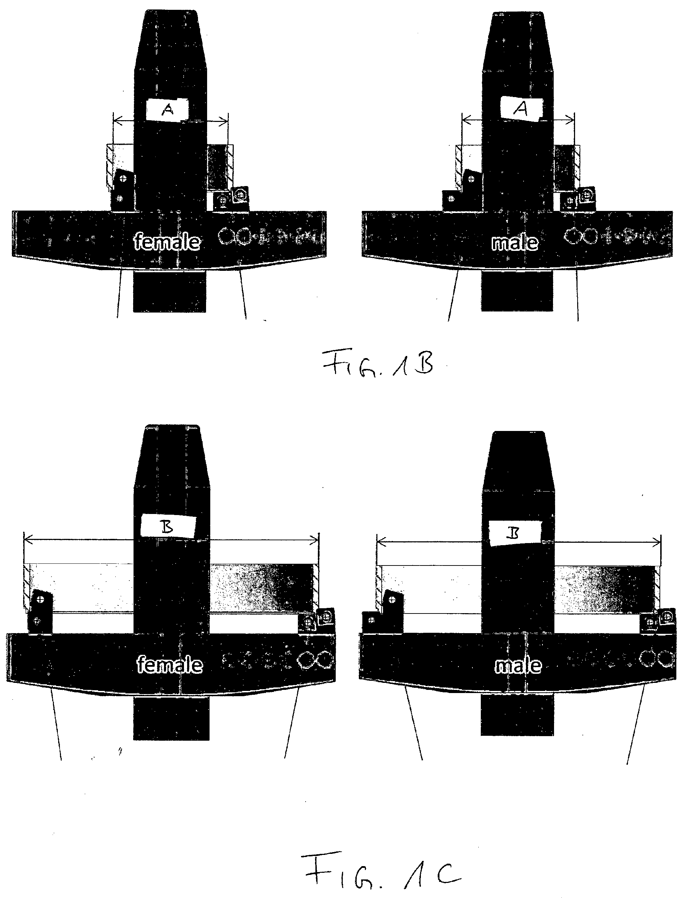

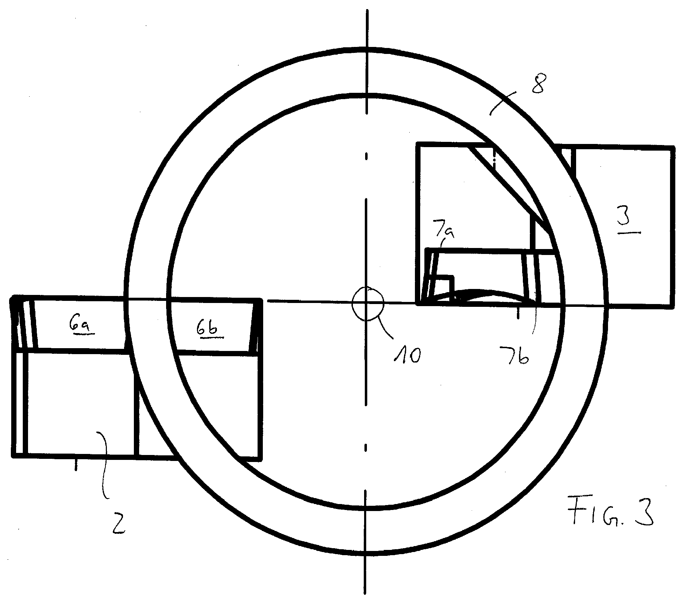

Der in Fig. 1 bis 3 dargestellte Anfaskopf 1 weist beispielhaft zwei Bearbeitungswerkzeugaufnahmen 2, 3 in versetzten, siehe insbesondere Fig. 3, Nuten 4, 5 mit hier jeweils zwei Bearbeitungswerkzeugen 6a, 6b bzw. 7a, 7b auf, die an einem Rohrende 8 in einem Arbeitsgang ein Fasenprofil 9 innen und außen ausbilden.

Die Bearbeltsungswerkzeuge 6a, 6b, 7a, 7c sind höhenmäßig gestuft.

So ist das hier schräg gestellte Bearbeitungswerkzeug 7a am wirkhöchsten angeordnet, d.h. seine Schnittkante wirkt bei einer Bewegung des Anfaskopfs 1 in Richtung auf das Rohrende 8 hin zuerst auf das Rohrende 8 ein. Beispielsweise wird die Rohrinnenseite durch das Bearbeitungswerkzeug 7a überdreht, vgl. Fig. 3. Dadurch wird eine erste Stufe des Fasenprofils 9 an der Rohrinnenseite ausgebildet.

Das Bearbeitungswerkzeug 7b weist eine geringere Wirkhöhe auf und bildet eine zweite Stufe des Fasenprofils 9 an der Rohrinnenseit aus.

Das beispielhaft schräg gestellte Bearbeitungswerkzeug 6a weist eine weitere Wirkhöhe auf und bildet eine Stufe des Fasenprofils 9 an der Rohraußenseite aus, vgl. Fig. 3.

Schließlich ebnet und entgratet das wlrkhöhennledrigste Bearbeitungswerkzeug 6b das Rohrende 8.

Die hier beispielhaft zwei Bearbeitungswerkzeugaufnahmen 2, 3 sind in die jeweilige Nut 4 bzw. 5 eingesetzt und darin entlang der Nut zwecks Anpassung an einen bestimmten Rohrdurchmesser verstellbar, Hierzu kann eine Skala 11 vorgesehen sein.

Feststellbar sind die Bearbeitungswerkzeugaufnahmen 2, 3 an der gewünschten Position (je nach Rohrdurchmesser A, B, siehe Fig. 1B und 1C) über Klemm- oder Schraubvorrichtungen. Illustriert ist eine Ausführung mit beispielhaft fünf Bohrungen 12, hier nur skalaseitig entlang der Nut 4, 5. Die Bohrungen 12 erstrecken sich durch von außen bis durch die hier skalaseitige Nutwandung hindurch und weisen vollständig oder abschnittsweise ein Gewinde auf, in welches eine Schraube einschraubbar ist. Die Schraube kontaktiert eine Oberfläche 13 der Bearbeitungswerkzeugaufnahme, die im insbesondere mittigen oder wie dargestellt unteren Kontaktbereich der Bearbeitungswerkzeugaufnahme glatt oder wie bei 14 Illustriert mit Rillen versehen oder wie bei 15 illustriert kreuzgeriffelt sein oder eine andere zur Klemmung geeignete Oberflächengestaltung aufweisen kann.

Die Bearbeitungswerkzeugaufnahme 2 ist auf gleiche Weise mit einer Klemmvorrichtung versehen.

Der Anfaskopf 1 ist quaderförmig mit abgeschrägten Seitenflächen 16, kann aber auch oval oder eiförmig oder kreisscheibenförmig ausgestaltet sein.

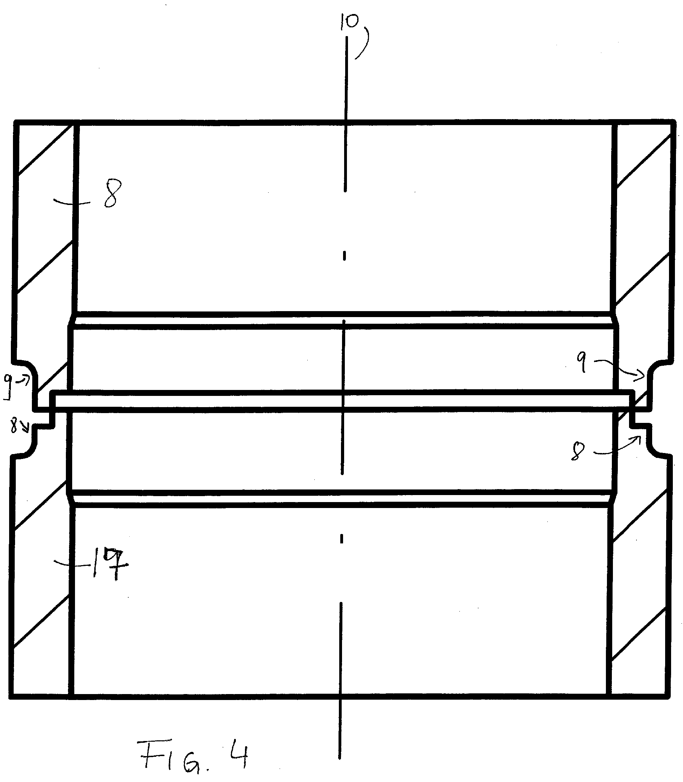

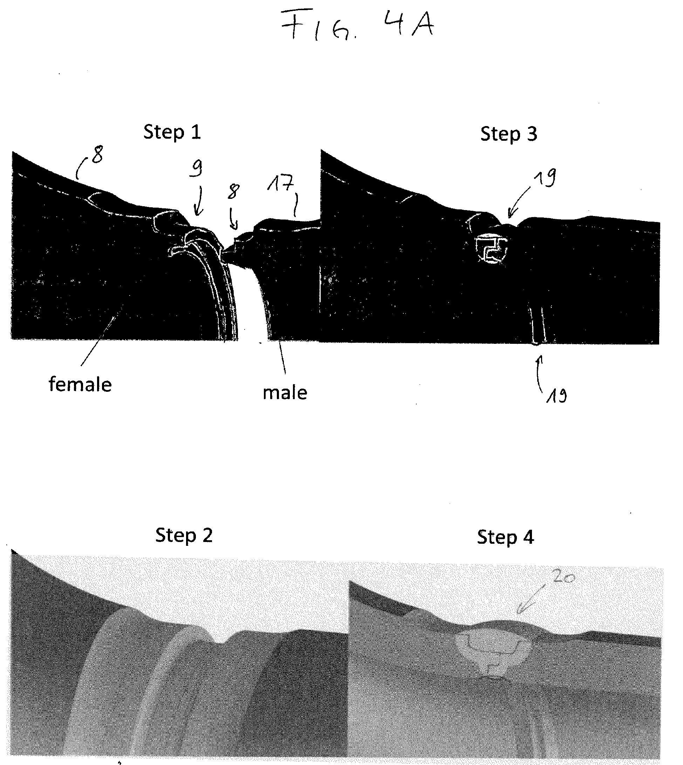

Fig. 4 illustriert das weibliche ("female") Rohrende 8 mit dem durch den Anfaskopf 1 der Fig. 1 bis 3 erzeugten Fasenprofil 9, in welches ein männliches ("male") Rohrende 17 mit komplementär ausgestaltetem Profil 18 einsetzbar ist zwecks Verschweißung. Das Fasenprofil 18 kann auf die gleiche Art hergestellt werden wie das Fasenprofil 9. Fig. 4A illustriert die erfindungsgemäß zum Verbinden erforderlichen Schritte:
- Schritt 1:: Ausbilden komplementärer Fasenprofil (female und male) an den Rohrenden 8,17
- Schritt 2:: Einsetzen des männlichen Rohrendes 8 in das weibliche Rohrende 17
- Schritt 3:: Ausbilden einer Schweißnaht 19
- Schritt 3:: Ausbilden einer Schweißnaht 20

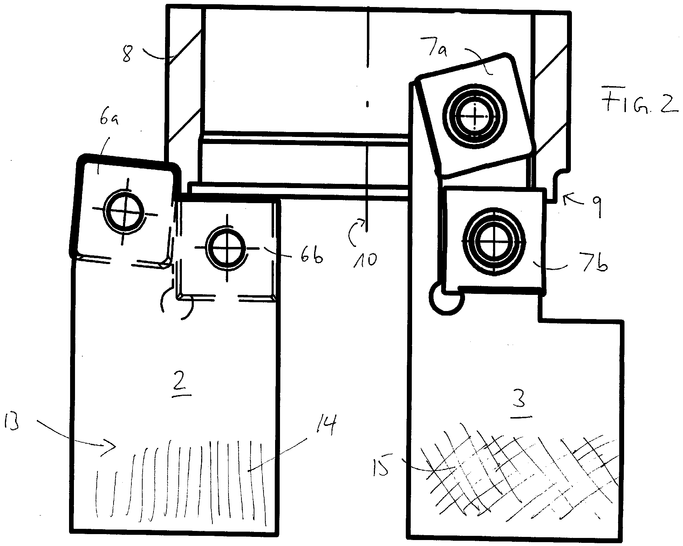

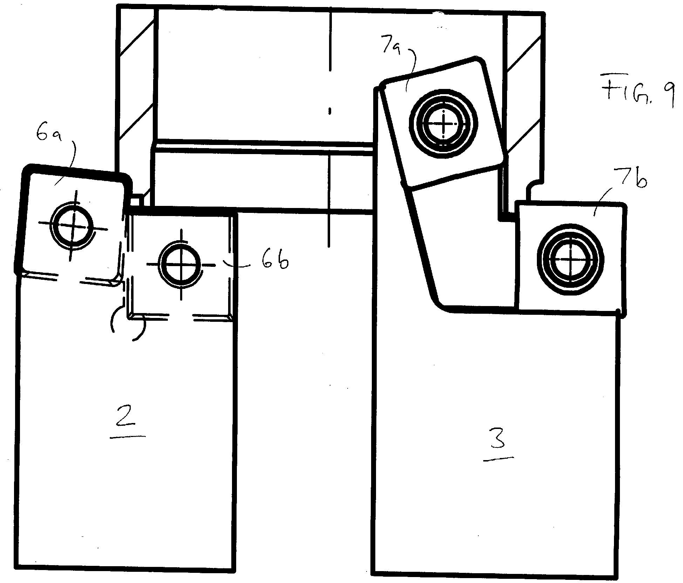

Es stellt sich der Vorteil ein, dass mit dem Anfaskopf 1 in der in Fig. 2 dargestellten Konfiguration das Fasenprofil 9 und mit dem Anfaskopf 1 in der in Fig. 9 dargestellten Konfiguration das komplementäre Fasenprofll 18 auf der Baustelle einfach und schnell herstellbar sind zwecks Ineinanderstecken und anschließendem Verschweißen der Rohrenden 8, 17 gemäß Fig. 4. Hierzu können einfach die entsprechend konfigurierten Anfasköpfe 1 gewechselt werden oder es kann eine Rohrfräsmaschine mit einem Anfaskopf für das weibliche und eine Rohrfräsmaschine mit einem Anfaskopf für das komplementäre männliche Ende vorgehalten werden.

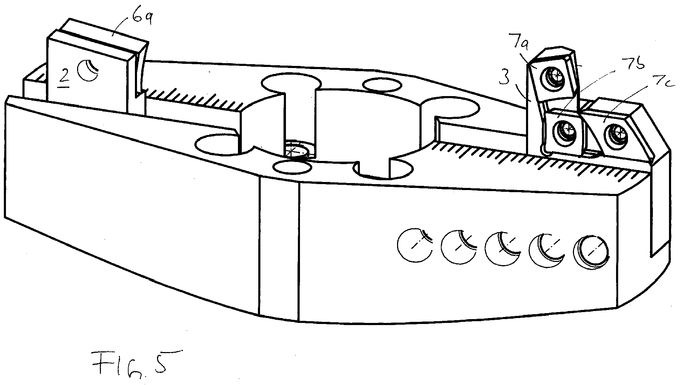

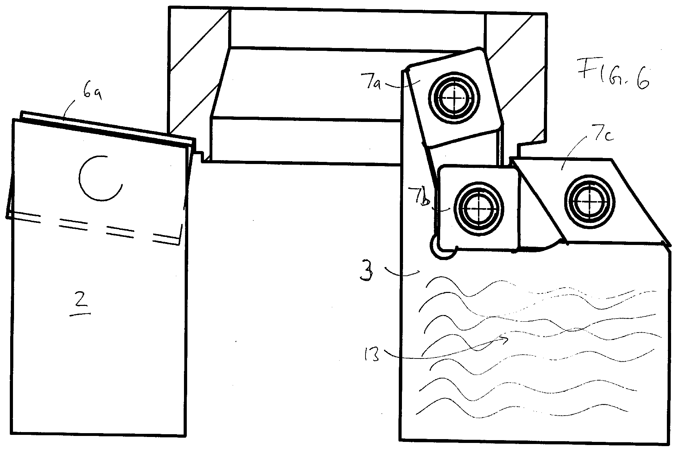

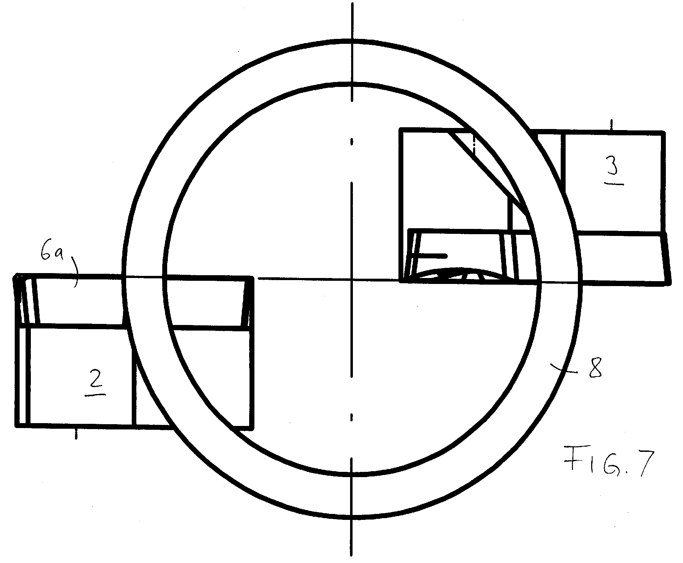

Bel der in Fig. 5 bis 7 dargestellten Ausführungsform ist an der Bearbeitungswerkzeugaufnahme 2 lediglich ein Bearbeitungswerkzeug 6a angeordnet, während an der Bearbeitungswerkzeugaufnahme 3 drei Bearbeitungswerkzeuge 7a, 7b, 7c befestigt sind. Hierdurch kann ein weiteres Fasenprofil hergestellt werden. Beispielhaft illustriert ist in Fig. 6 ist eine wellenförmige Aufrauhung der Oberfläche 13.

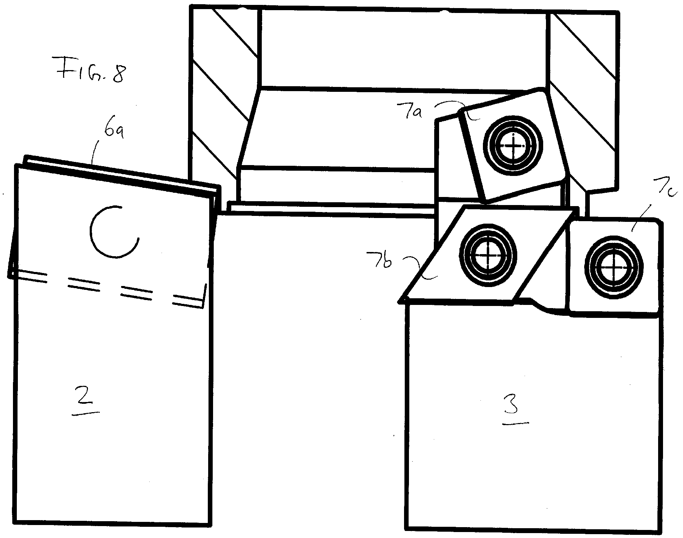

Fig. 8 und 9 illustrieren Ausführungsformen mit weiteren Fasenprofilen und Bearbeitungswerkzeuganordnungen.

Die sich erfindungsgemäß einstellenden Vorteile sind u.a. die hohe Flexibilität beim Einsatz und die damit verbundene Kosteneinsparung. So können die zu verschweißenden Rohrenden erfindungsgemäß schneller und kostengünstiger als bisher mit u.a. komplementären Fasen (Fig. 4) versehen werden.

Je nach Einsatzszenario können hierzu eine Fräse mit einem Anfaskopf in der in Fig. 2 dargestellten Konfiguration und eine weitere Fräse mit einem Anfaskopf in der in Fig. 9 dargestellten Konfiguration vorgesehen sein, um schnell viele komplentäre Rohrendenpaare auszubilden.

Es kann auch vorgesehen sein, eine Fräse abwechselnd mit einem Anfaskopf für das männliche Ende und einem Anfaskopf für das weibliche Ende zu betreiben und so schnell und mit kleinem Maschinenaufwand zuerst die männlichen und dann die weiblichen Enden auszubilden (oder umgekehrt).

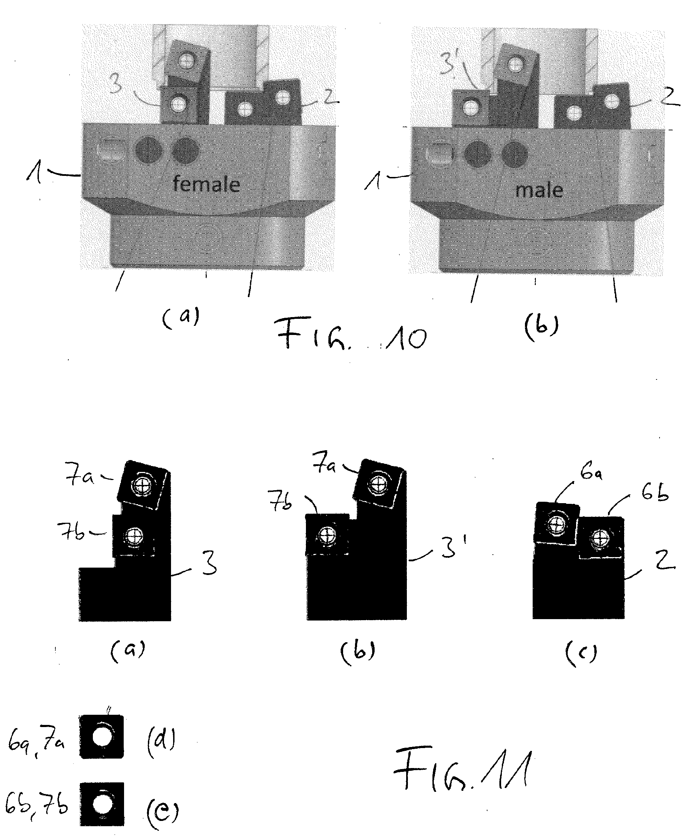

Schließlich kann für einen minimalen Maschinenaufwand eine Fräse mit einem Anfaskopf verwendet werden, bei dem die Bearbeitungswerkzeugaufnahme 3 der Fig. 2 gegen die Bearbeitungswerkzeugaufnahme 3 der Fig. 9 gewechselt wird, um von der männlichen auf die weibliche Konfiguration zu wechsein. Dies ist noch einmal In Fig. 10 (a), (b) illustriert, wobei Fig. 10 (a) Fig. 2 entspricht und Fig. 10 (b) der Fig. 9. In diesem Szenario sind lediglich die drei Bearbeitungswerkzeugaufnahmen 2, 3 und 3' vorzusehen, siehe Flg 11 (a), (b), (c), und es müssen nur die Bearbeitungswerkzeugaufnahme 3, 3' getauscht werden.

Die Wechselplatten können je nach auszubildendem Fasenprofil an Ihren Ecken beispielsweise abgerundet (siehe Fig. 11 (d)) oder spitz (siehe Fig. 11 (e)) ausgestaltet sein.

## Patentansprüche

1. An einer insbesondere mobilen Rohrendenbearbeitungsstation drehantreibbar befestigbarer Anfaskopf (1) mit Bearbeitungswerkzeugen (6a-6c, 7a-7c) zum Bearbeiten eines Rohrendes (8) unter kreisförmigem Umlaufen um eine Rotationsachse (10) des Anfaskopfs (1) zwecks Herstellung eines Fasenprofils (9) am Rohrende (8), **gekennzeichnet durch** eine relativ zur Rotationsachse (10) entsprechend dem Durchmesser des zu bearbeitenden Rohrendes (8) radial verstellbare Bearbeitungswerkzeugaufnahme (2).

2. Anfaskopf nach Anspruch 1, **dadurch gekennzeichnet, dass** die Bearbeitungswerkzeugaufnahme (2) zwei oder mehr relativ zueinander (i) parallel zur Rotationsachse wirkhöhenversetzte und/oder (ii) quer zur Rotationsachse (9) radial versetzte und/oder (iii) verschieden ausgestaltete und/oder (iv) mit unterschiedlichem Angriffswinkel angeordnete Bearbeitungswerkzeuge (6a-6c) aufnimmt.

3. Anfaskopf nach Anspruch 1 oder 2, **dadurch gekennzeichnet, dass** die Bearbeltungswerkzeugaufnahme (2) in einer Nut (4) befestigt ist.

4. Anfaskopf nach Anspruch 3, **dadurch gekennzeichnet, dass** Vorrichtungen zum Verschrauben der Bearbeitungswerkzeugaufnahme (2) an verschiedenen radialen Abständen zur Rotationsachse (10) vorgesehen sind.

5. Anfaskopf nach Anspruch 4, **dadurch gekennzeichnet, dass** die Vorrichtungen zum Verschrauben jeweils eine sich quer durch die Nut (2) erstreckende Bohrung (12) aufweisen.

6. Anfaskopf nach Anspruch 5, **dadurch gekennzeichnet, dass** die Bohrung (12) einen Gewindeabschnitt aufweist.

7. Anfaskopf nach einem der Ansprüche 1 bis 6, **dadurch gekennzeichnet, dass** er quer zur Rotationsachse (10) eine im Wesentlichen langgestreckte Form aufweist.

8. Anfaskopf nach einem der Ansprüche 3 bis 7, **dadurch gekennzeichnet, dass** eine weitere Nut (5) für eine weitere Bearbeltungswerkzeugaufnahme (3) vorgesehen ist.

9. Anfaskopf nach einem der Ansprüche 1 bis 8, **dadurch gekennzeichnet, dass** das Bearbeitungswerkzeug (6a-6d, 7a-7d) eine Wechselplatte ist.

10. Insbesondere mobile Rohrendenbearbeitungsstation zum Ausbilden eines Fasenprofils (9) an einem Rohrende (8), mit einer Rohraufnahme, einem Anfaskopf (1) und einer Antriebsvorrichtung für den Anfaskopf (1), **gekennzeichnet durch** einen Anfaskopf (1) nach einem der vorhergehenden Ansprüche mit einer relativ zur Rotationsachse (10) entsprechend dem Durchmesser des zu bearbeitenden Rohrs radial verstellbaren Bearbeitungswerkzeugaufnahme (2) zum Ausbilden eines vorgegebenen Fasenprofils (9) an der Rohrendenaußen- und -innenseite in einem Arbeitsgang.

11. Werkzeugsatz zum Vorbereiten zu verschweißender Rohrenden, umfassend einen an einer insbesondere mobilen Rohrendenbearbeitungsstation drehantreibbar befestigbaren Anfaskopf (1) sowie drei Bearbeitungswerkzeugaufnahmen (2, 3, 3'), wobei die Bearbeitungswerkzeugaufnahmen (2, 3, 3') Bearbeitungswerkzeuge (8a-6c, 7a-7c) zum Bearbeiten eines Rohrendes (8) unter kreisförmigem Umlaufen um eine Rotationsachse (10) des Anfaskopfs (1) zwecks Herstellung eines Fasenprofils (9) am Rohrende (8), aufweisen, wobei eine der Bearbeitungswerkzeugaufnahmen (3) zum Ausbilden eines männlichen und eine andere der Bearbeitungswerkzeugaufnahmen (3') zum Ausbilden eines weiblichen Fasenprofils ausgestaltet ist jeweils unter Zusammenwirkung mit der dritten Bearbeitungswerkzeugaufnahme (2).

12. Werkzeugsatz zum Vorbereiten zu verschweißender Rohrenden, umfassend zwei an einer insbesondere mobilen Rohrendenbearbeltungsstation drehantreibbar befestigbare Anfasköpfe (1) mit Bearbettungswerkzeugaufnahmen (2, 3, 3'), wobei die Bearbeitungswerkzeugaufnahmen (2, 3, 3') Bearbeitungswerkzeuge (6a-6c, 7a-7c) zum Bearbeiten eines Rohrendes (8) unter kreisförmigem Umlaufen um eine Rotationsachse (10) des Anfaskopfs (1) zwecks Herstellung eines Fesenprofils (9) am Rohrende (8). aufweisen, wobei die Bearbeitungswerkzeugaufnahmen (2. 3) des einen Anfaskopfs (1) zum Ausbilden eines männlichen und die Bearbeitungswerkzeugaufnahmen (2, 3') des anderen Anfaskopfs (1) zum Ausbilden eines weiblichen Fasenprofils ausgestaltet sind.

13. Verfahren zum Verschweißen zweier Rohrenden, umfassend:
Bereitstellen eines Werkzeugsatzes gemäß Anspruch 11:
Ausbilden eines männlichen Fasenprofils an einem Rohrende;
Wechseln einer Bearbeitungswerkzeugaufnahme (3,3') am Anfaskopf;
Ausbilden eines weiblichen Fasenprofils am anderen Rohrende;
Zusammenstecken der Rohrenden;
Verschweißen der Rohrenden.

14. Verfahren zum Verschweißen zweier Rohrenden, umfassend:
Bereitstellen eines Werkzeugsatzes gemäß Anspruch 12:
Ausbilden eines männlichen Fasenprofils an einem Rohrende;
Wechseln des Anfaskopfs;
Ausbilden eines weiblichen Fasenprofils am anderen Rohrende;
Zusammenstecken der Rohrenden;
Verschweißen der Rohrenden.
